# EUROPÄISCHE PATENTSCHRIFT

(11) **EP 3 353 616 B1**
(45) Veröffentlichungstag und Bekanntmachung des Hinweises auf die Patenterteilung: **03.11.2021**
(21) Anmeldenummer: 16767188.2
(22) Anmeldetag: 08.09.2016
(51) Int. Cl.: G01F 1/00, G05D 7/06

(54) **ELEKTRONISCHER DURCHFLUSSREGLER**
ELECTRONIC FLOW CONTROLLER
RÉGULATEUR DE DÉBIT ÉLECTRONIQUE

(30) Priorität: 22.09.2015 CH 13752015
(43) Veröffentlichungstag der Anmeldung: 01.08.2018
(73) Patentinhaber: Belimo Holding AG, 8340 Hinwil (CH)
(72) Erfinder: HOLOCH, Philip, 8484 Neschwil (CH); HOBI, Reto, 8735 St. Gallenkappel (CH)
(74) Vertreter: Rentsch Partner AG
(86) Internationale Anmeldenummer: PCT/EP2016/071230
(87) Internationale Veröffentlichungsnummer: WO 2017/050588

(56) Entgegenhaltungen:
- WO-A2-2006/121905
- DE-C1- 10 047 383
- US-A1- 2008 294 293
- US-A1- 2015 088 321
- Belimo Americas: "Belimo Energy Valve", , 13. August 2015 (2015-08-13), XP055241249, Gefunden im Internet: URL:https://web.archive.org/web/2015081312 0227/http://energyvalve.com/product-doc.ht ml [gefunden am 2016-01-14]

## Beschreibung

### TECHNISCHES GEBIET

Die vorliegende Erfindung bezieht sich auf das Gebiet der Durchflussregler. Sie betrifft einen elektronischen Durchflussregler für Anwendungen im HVAC-Bereich gemäss dem Oberbegriff des Anspruchs 1.

### STAND DER TECHNIK

Bei Anwendungen insbesondere im Gebiet HVAC (Heating, Ventilation, Air Conditioning) werden häufig druckunabhängige Regelkugelhähne eingesetzt. Derartige Regelkugelhähne, wie sie beispielsweise von der Anmelderin unter der Bezeichnung PICCV (Pressure Independent Characterized Control Valve) angeboten werden, enthalten einen von aussen einstellbaren Kugelhahn und eine interne mechanische Durchflussregelung, welche die eingestellten Durchflussmengen bei wechselnden Drücken weitgehend konstant halten (siehe z.B. die WO 01/13017 A2).

Neben den mechanisch geregelten Ventilen gibt es in jüngerer Zeit auch elektronisch geregelte Varianten, die bei der Anmelderin unter der Bezeichnung EPIV (Electronic Pressure Independent Valve) angeboten werden. Hier wird ein über einen motorisierten Aktuator einstellbares Ventil per Flansch- und Schraubverbindung mit einem Anbauteil gekoppelt, durch welches die zu regelnde Strömung fliesst, und die eine beispielsweise mechanisch, mit Druckdifferenzen, mit Ultraschall oder magnetisch induktiv arbeitende Messeinrichtung zur Bestimmung der Strömungsgeschwindigkeit enthält (siehe z. B. die US 2015/057816 A1).

Das elektronisch geregelte EPIV ist eine Weiterentwicklung des druckunabhängigen Regelkugelhahns PICCV. Weil es vier Funktionen ― messen, regeln, abgleichen und absperren ― in einer Armatur vereinigt (in einer anderen Version mit zusätzlichem Abrechnen und Aufzeichnen sind es sogar 6 Funktionen), wird die Ventilauslegung wesentlich einfacher. Zudem verringert sich der Aufwand für den hydraulischen Abgleich in einem HVAC-System markant. Der Zusammenbau der Vorrichtung aus einem Ventilteil und einem separaten Durchflussmessteil und die anschliessende Verkabelung der Teile mit einer zentralen Auswerte- und Steuereinheit ist jedoch vergleichsweise aufwändig. Darüber hinaus kann nicht sichergestellt werden, dass immer zueinander passende Komponenten verwendet werden.

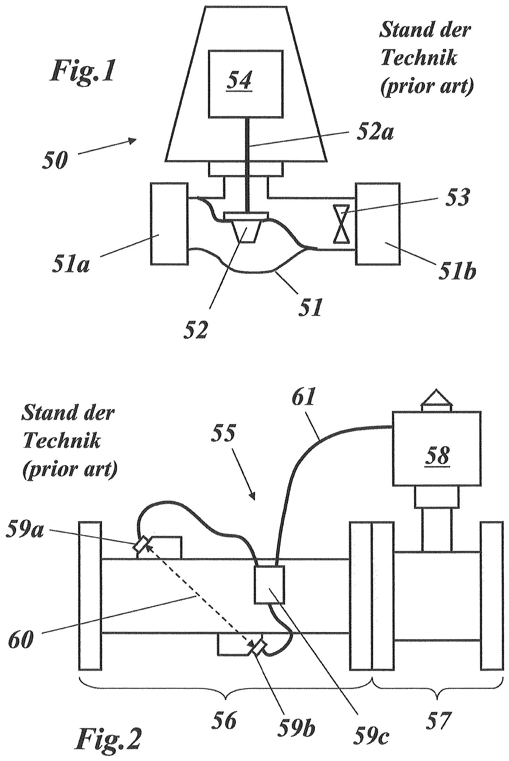

Die Druckschrift WO 98/25086 A1 offenbart eine modulierende Fliessmedium-Steuervorrichtung für ein auf einem Fliessmedium basierendes Heiz- und Kühlsystem für eine Messumgebung, die sich dadurch auszeichnet, dass die Strömungsfeststellmittel im Ventilkörper angeordnet sind und das Ventilsteuergerät mit einer maximalen Fliessmedium-Durchflussmenge durch das Ventil programmiert ist und auf das Rückkopplungssignal aus den Strömungsfeststellmitteln reagiert, um ein Ausmass der Strömung des Fliessmediums durch das System zur Fliessmedium-Ausbalancierung durch Begrenzung der Stellung des Ventil durch die programmierte maximale Fliessmedium-Durchflussmenge zu begrenzen. Fig. 1 zeigt ein Ausführungsbeispiel für eine derartige Steuervorrichtung.

Das vorbekannte Steuerventil 50 hat einen einstückigen Ventilkörper 51, der für das Einfügen in eine Leitung mit zwei endseitigen Anschlussflanschen 51a und 51b versehen ist. Der Durchfluss des Mediums durch das Steuerventil 50 wird durch eine mittig angeordnete Öffnung bestimmt, deren Öffnungsquerschnitt durch ein verschiebbares Ventilelement 52 verändert werden kann. Die steuernde bzw. regelnde Bewegung des Ventilelements 52 wird über einen in den Ventilkörper 51 hineingeführten Betätigungsschaft 52a mittels eines Motors 54 bewirkt. Der Strom des Mediums durch das Steuerventil 50 wird mittels einer (nicht näher spezifizierten, wohl aber mechanischen) Strömungsmesseinrichtung 53 aufgenommen, deren Signale über eine (nicht eingezeichnete) Leitung einer entfernt angeordneten zentralen Steuerung zugeführt werden. Von dieser wird auch der Motor 54 gesteuert, so dass ein Regelkreis unter Einbindung einer zentralen Steuerung gebildet wird.

Dieses bekannte, für HVAC-Anwendungen vorgesehene Steuerventil ist einerseits kompakt im Aufbau. Andererseits hat es den Nachteil, dass sowohl die Messeinrichtung (53) als auch die Regeleinrichtung (52, 52a, 54) separat mit einer entfernten Steuerung verkabelt werden müssen, was aufwändig und fehleranfällig ist. Darüber hinaus ist die mechanische Strömungsmesseinrichtung mittels Flügelrad oder dgl. störungsanfällig, ungenau und hat einen eingeschränkten Messbereich.

Es ist weiterhin in der Druckschrift US 2012/0090702 A1 für Anwendungen in der Landwirtschaft (Bewässerungsanlagen) eine vereinfachte Kombination aus einem membrangesteuerten Abschaltventil und einem integrierten Wasserzähler vorgeschlagen worden. Der Wasserzähler umfasst einen hohlen Körper mit einem Eingang und einem Ausgang für das Wasser und einen Durchgang, der Eingang und Ausgang verbindet. In den Körper ist eine schräg zur Strömungsrichtung orientierte Ultraschall-Messstrecke integriert, die an den Enden mit einem Ultraschallsender und Ultraschallempfänger ausgestattet ist. Der Wasserzähler wird mittels lokaler Batterie durch eine am Körper des Wasserzählers angebrachte Elektronik betrieben, während das Abschaltventil durch ein entferntes Ventil druckgesteuert ist.

Diese bekannte Anordnung ist nicht für eine kontinuierliche Strömungsregelung vorgesehen und ausgelegt. Die Ultraschall-Messstrecke liegt sehr nahe am Abschaltventil, so dass aufgrund der dadurch verursachten Verwirbelungen nur sehr ungenaue Durchflussmessungen möglich sind. Auch hier ist eine Verschaltung bzw. Kommunikation der einzelnen Anlagenteile mit einer externen Zentrale notwendig. Diese Variante funktioniert nur bei voll geöffnetem Ventil und ist damit nur für On/Off Anwendungen geeignet.

Ein Beispiel eines Ultraschall-Durchflussmessers ist in der DE 100 47 383 C1 gezeigt. Der Ultraschall-Durchflussmesser umfasst ein Messrohr, durch welches ein Medium durchführbar ist und an welchem längs zueinander beabstandet Ultraschallköpfe an Flaschen angeordnet sind. Zur Führung eines Ultraschallsignals von einem Ultraschallkopf zum anderen sind jeweils ein Umlenkspiegel im Bereich der jeweiligen Ultraschallköpfe innerhalb des Messrohrs angeordnet, wobei die Umlenkspiegel jeweils zumindest einen angeformten Haltebügel aufweisen, wobei das jeweils freie Ende eines jeden Haltebügels vom jeweiligen Ultraschallkopf im oder am Flansch fixiert ist.

Ein Beispiel eines elektronisch gesteuerten Regelventils, insbesondere eines eingangs genannten PICCVs, ist in der WO2006/121905 A2 gezeigt. Das Regelventil umfasst ein Ventilschaft, welches mit einem Ventilelement in Eingriff steht, um das Ventilelement durch Rotation des Ventilschafts zwischen einer offenen und einer geschlossenen Position zu bewegen, ein Ventilantrieb, welches mit dem Ventilschaft in Eingriff steht, um den Ventilschaft zu drehen, und ein Feldeinstellmechanismus umfassend eine Einstellschraube, um einen mechanischen Offenendpunktanschlag zu bewegen. Der Feldeinstellmechanismus steht mit dem Ventilschaft sowie mit dem Antrieb in Eingriff, um eine Einstellung der Bewegung des Ventilschafts mittels dem Antrieb zu ermöglichen, wobei der maximale offene Fluss durch das Ventil durch Rotation der Einstellschraube auf einen vorbestimmten Maximalwert eingestellt werden kann.

Weiterhin ist bereits aus der Druckschrift US 2015/088321 A1 ein druckunabhängiges Steuerventilsystem mit einem Rohrleitungssystem für HVAC-Anwendungen bekannt, wie es in Fig. 2 wiedergegeben ist. Die selbstkorrigierende Steueranordnung 55 der Fig. 2 ist Teil eines einen Strömungspfad zur Verfügung stellenden Rohrleitungssystems, das einen separaten Messteil 56 und einen separaten Ventilteil 57 umfasst, die durch entsprechende Flansche miteinander verbindbar sind.

Im stromaufwärts gelegenen Ende des Messteils 56 der Steueranordnung 55 ist eine Strömungskammer ausgebildet, durch welche die Strömung hindurchtritt. Hier definieren versetzt angeordnete Ultraschall-Transducer 59a und 59b eine Messstrecke 60, mit welcher der Durchfluss gemessen werden kann. Am stromabwärtigen Ende der Steueranordnung 55 steuert der Ventilteil 57, der beispielsweise als Klappenventil ausgebildet sein kann, mittels einer Steuer- und Antriebselektronik 58 den Durchfluss. Die Transducer 59a und 59b sind durch eine Verkabelung 61 mit einer Ultraschall-Ansteuer- und Auswertelektronik 59c verbunden, ebenso wie die Steuer- und Antriebselektronik 58 des Ventilteils 57.

Nachteilig ist bei dieser Lösung, dass Messteil und Ventilteil separate Leitungselemente sind, die bei der Montage erst an den Flanschverbindungen miteinander verbunden werden müssen. Aufwändig ist auch die externe Verkabelung vor Ort, die kompliziert und fehleranfällig ist.

### DARSTELLUNG DER ERFINDUNG

Es ist daher eine Aufgabe der Erfindung, einen elektronischen Durchflussregler zu schaffen, welcher die Nachteile bekannter geregelter Steuerventile vermeidet und sich durch Robustheit, Genauigkeit, Kompaktheit und Einfachheit in der Anwendung auszeichnet.

Die Aufgabe wird durch die Merkmale des Anspruchs 1 gelöst.

Die Erfindung geht aus von einem elektronischen Durchflussregler für Anwendungen im HVAC-Bereich, welcher einen von einem strömenden Medium durchsetzten, einstückigen Ventilkörper umfasst, der entlang der Strömungsrichtung in einen Ventilabschnitt und einen Durchflussmessabschnitt unterteilt ist, wobei im Ventilabschnitt für die Steuerung des Durchflusses ein über eine Ventilspindel von aussen betätigbares Ventilelement angeordnet ist, und wobei im Durchflussmessabschnitt eine Messstrecke zur Bestimmung der Durchflussrate mittels Ultraschall ausgebildet ist.

Sie zeichnet sich dadurch aus, dass am Ventilkörper im Bereich des Durchflussmessabschnitts Zugänge zum Ein- bzw. Auskoppeln von Ultraschall in die bzw. aus der Messstrecke ausgebildet sind, und dass auf den Ventilkörper eine Regeleinheit aufgesetzt ist, welche erste Mittel zur Betätigung des Ventilelements umfasst, die mit der Ventilspindel in Eingriff stehen, sowie zweite Mittel zum Aussenden bzw. Empfangen von Ultraschallsignalen, welche akustisch an die Zugänge zum Ein- bzw. Auskoppeln von Ultraschall angekoppelt sind.

Eine Ausgestaltung der Erfindung ist dadurch gekennzeichnet, dass die Ventilspindel und die Zugänge zum Ein- bzw. Auskoppeln von Ultraschall an einer Seite des Ventilkörpers angeordnet sind, und dass die Regeleinheit an dieser Seite auf den Ventilkörper aufgesetzt ist.

Hierbei können die Ventilspindel und die Zugänge zum Ein- bzw. Auskoppeln von Ultraschall in einer parallel zur Strömungsrichtung orientierten Linie angeordnet sein.

Eine andere Ausgestaltung der Erfindung ist dadurch gekennzeichnet, dass die Messstrecke zur Bestimmung der Durchflussrate mittels Ultraschall parallel zur Strömungsrichtung im Durchflussmessabschnitt orientiert ist.

Dabei können die Strömungsrichtung im Durchflussmessabschnitt konstant sein, der Ultraschall quer zur Messstrecke in der Messstrecke eingekoppelt bzw. aus der Messstrecke ausgekoppelt werden, und zur Ein- bzw. Auskopplung im Durchflussmessabschnitt am Anfang und Ende der Messstrecke angeordnete Umlenkelemente vorgesehen sein.

Auch kann der Strömungsquerschnitt im Durchflussmessabschnitt im Bereich der Messstrecke reduziert sein.

Alternativ kann die Strömungsrichtung im Durchflussmessabschnitt einem U-förmigen Verlauf folgen, bei welchem die Strömung in einem ersten Teilabschnitt senkrecht zur durch das Ventil vorgegebenen Hauptstromrichtung, in einem zweiten Teilabschnitt parallel zur Hauptstromrichtung und in einem dritten Teilabschnitt wieder senkrecht zur Hauptstromrichtung strömt, wobei die Messstrecke dem U-förmigen Verlauf der Strömung folgt, der Ultraschall quer zur Hauptstromrichtung in den ersten oder dritten Teilabschnitt eingekoppelt bzw. aus dem ersten oder dritten Teilabschnitt ausgekoppelt wird, und wobei an den Übergängen zwischen dem ersten und zweiten Teilabschnitt und dem zweiten und dritten Teilabschnitt Umlenkelemente ausgebildet sind.

Grundsätzlich können sämtliche Ventiltypen vorgesehen werden wie Hubventil, Zylinderventil (Küken), Drosselklappe, Butterfly, Membranventil, Schieberventil, Kugelhahn, 6-Wege-Kugelhahn. Eine weitere Ausgestaltung der Erfindung ist jedoch dadurch gekennzeichnet, dass das Ventilelement kugelförmig ausgebildet ist.

Eine wieder andere Ausgestaltung der Erfindung ist dadurch gekennzeichnet, dass in der Regeleinheit die ersten Mittel zur Betätigung des Ventilelements und die zweiten Mittel zum Aussenden bzw. Empfangen von Ultraschallsignalen unter Ausbildung eines Regelkreises mit einer elektronischen Steuerung fest verdrahtet sind.

Dabei kann zur festen Verdrahtung eine gedruckte Schaltungsplatte vorgesehen sein.

Eine noch andere Ausgestaltung der Erfindung ist dadurch gekennzeichnet, dass die Regeleinheit in einem geschlossenen Gehäuse untergebracht ist.

Eine weitere Ausgestaltung der Erfindung ist dadurch gekennzeichnet, dass die Zugänge am Ventilkörper zum Ein- bzw. Auskoppeln von Ultraschall in die bzw. aus der Messstrecke als seitlich abgehende Flansche ausgebildet sind.

Eine weitere Ausgestaltung der Erfindung, die sich als sogenanntes "energy valve" einsetzen lässt, ist dadurch gekennzeichnet, dass dritte Mittel zur Messung der Temperatur des durch das Steuerventil strömenden Mediums vorgesehen sind.

Hierbei können die dritten Mittel im Ventilabschnitt des Steuerventils angeordnet sein.

Insbesondere können die dritten Mittel zur berührungslosen Temperaturmessung an einem mit dem durch das Steuerventil strömenden Medium in thermischem Kontakt befindlichen Teil des Ventilabschnitts ausgebildet sein.

Dabei können die dritten Mittel einen Infrarotsensor umfassen, der in der Regeleinheit untergebracht ist, wobei der mit dem durch das Steuerventil strömenden Medium in thermischem Kontakt befindlichen Teil die in die Regeleinheit hineinragende Ventilspindel des Ventilabschnitts ist.

Weiterhin kann der Infrarotsensor mit einem Abstand über dem freien Ende der Ventilspindel angeordnet sein, wobei zur Überbrückung des Abstandes die Ventilspindel mit einer Spindelverlängerung verlängert ist.

Insbesondere kann die Spindelverlängerung in der Regeleinheit gelagert sein, wobei die Spindelverlängerung zur Verbesserung des thermischen Kontaktes mit Federspannung gegen das freie Ende der Ventilspindel gepresst wird.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: das Schema eines ersten elektronisch geregelten Ventils nach dem Stand der Technik;
- Fig. 2: das Schema eines zweiten elektronisch geregelten Ventils nach dem Stand der Technik;
- Fig. 3: einen Längsschnitt durch einen elektronischen Durchflussregler gemäss einem Ausführungsbeispiel der Erfindung (ohne die zugehörige aufsetzbare Regeleinheit);

- Fig. 4: einen Längsschnitt durch einen elektronischen Durchflussregler gemäss einem anderen Ausführungsbeispiel der Erfindung (ohne die zugehörige aufsetzbare Regeleinheit);
- Fig. 5: einen Längsschnitt durch einen elektronischen Durchflussregler gemäss einem weiteren Ausführungsbeispiel der Erfindung mit der zugehörigen aufgesetzten Regeleinheit;
- Fig. 6: in einem vereinfachten Schema ein elektronischen Durchflussregler gemäss einem wieder anderen Ausführungsbeispiel der Erfindung mit U-förmiger Umlenkung;
- Fig. 7: den Ventilabschnitt eines Ausführungsbeispiels eines elektronischen Durchflussreglers, der zusätzlich mit Mitteln zur Messung der Temperatur des durchströmenden Mediums ausgerüstet ist und als sogenanntes "energy valve" einsetzbar ist;
- Fig. 8: in dem Ventilabschnitt gemäss Fig. 7 nach teilweiser Entfernung der Regeleinheit den zur Temperaturmessung eingesetzten, auf der Unterseite eines PCB angeordneten Infrarotsensor, der die Stirnseite einer auf die Ventilspindel aufgesetzten Spindelverlängerung abtastet;
- Fig. 9: die Anordnung aus Fig. 8 nach Entfernung des auf der Ventilspindel sitzenden Mitnehmers; und
- Fig. 10: einen Querschnitt durch die Spindelachse der Anordnung aus Fig. 7.

### WEGE ZUR AUSFÜHRUNG DER ERFINDUNG

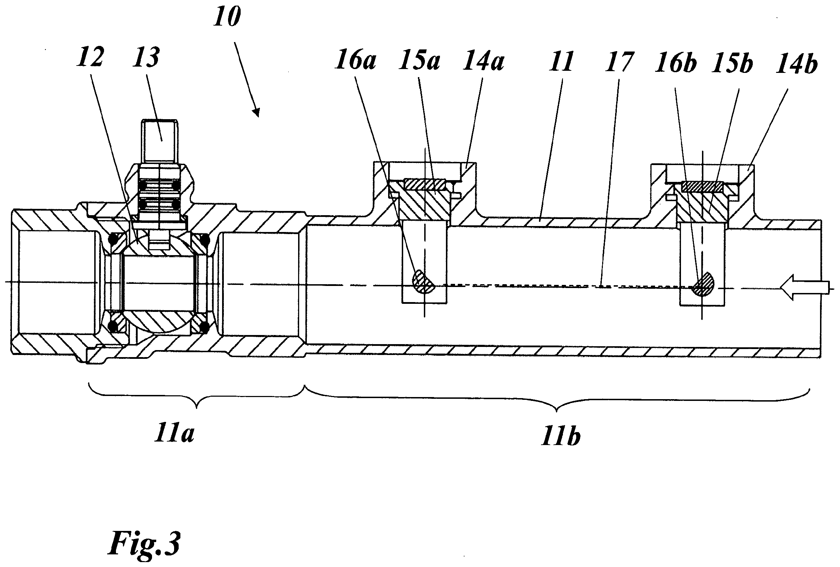

Fig. 3 zeigt einen Längsschnitt durch einen elektronischen Durchflussregler gemäss einem Ausführungsbeispiel der Erfindung, wobei die Antriebs-, Mess- und Regelelektronik der besseren Übersichtlichkeit wegen weggelassen ist. Das Steuerventil 10 der Fig. 3 weist einen einstückigen Ventilkörper 11 auf, der beispielsweise als metallisches Guss- oder Schmiedeteil hergestellt ist und längs der Strömungsrichtung in einen Ventilabschnitt 11a und einen Durchflussmessabschnitt 11b unterteilt werden kann.

Im Ventilabschnitt 11a ist in diesem Ausführungsbeispiel ein Kugelventil ausgebildet mit einem drehbar gelagerten, kugelförmigen Ventilelement 12, das mittels einer nach aussen herausgeführten Ventilspindel zur Steuerung des Durchflusses durch den Ventilkörper 11 gedreht werden kann. Ein solches Ventil ist z.B. aus der WO 2014/198367 A1 bekannt. Andere Arten von Ventilen wie z.B. Klappenventile sind aber im Ventilabschnitt 11a ebenso gut denkbar.

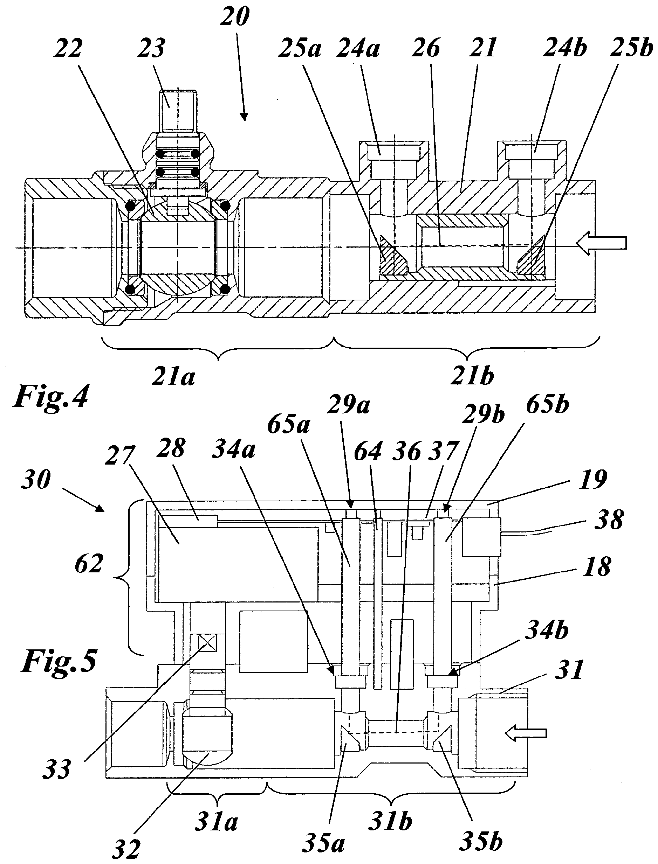

Der Durchflussmessabschnitt 11b ist im Beispiel der Fig. 3 als gerader durchgehender Rohrabschnitt mit konstantem Innendurchmesser ausgebildet. Im Durchflussmessabschnitt 11b ist mittig eine sich parallel zur Strömungsrichtung erstreckende Messstrecke 17 ausgebildet, die zwischen zwei in Rohrlängsrichtung voneinander beabstandeten Umlenkelementen 16a und 16b für den sich im Rohr ausbreitenden Ultraschall verläuft. Auf dieser Messstrecke 17 können in an sich bekannter Weise die Unterschiede in der Schallausbreitung mit der Strömung und gegen die Strömung bestimmt und ausgewertet werden. Der dafür notwendige Ultraschall wird quer zur Strömungsrichtung durch zwei am Ventilkörper 11 angeformte Messflansche 14a und 14b durch darin angeordnete Öffnungen 15a und 15b ein- bzw. ausgekoppelt. Die dafür notwendigen Transducer sind in einer an den Ventilkörper 11 ansetzbaren Regeleinheit (62 in Fig. 5) untergebracht, die in Fig. 3 weggelassen ist.

Mit einer Ventilanordnung gemäss Fig. 3 wird im Durchflussmessabschnitt 11b fortlaufend oder periodisch der Durchfluss gemessen, der proportional zur Strömungsgeschwindigkeit ist. Die Messwerte werden in einer in der Regeleinheit untergebrachten Elektronik ausgewertet und in Steuersignale für den ebenfalls in der Regeleinheit untergebrachten Ventilantrieb umgesetzt, sofern der Durchfluss von einem voreingestellten gewünschten Wert abweicht. Da der Durchflussmessabschnitt 11b in Fig. 3 sehr lang ausgeführt und die Messstrecke 17 daher entsprechend weit vom Ventilabschnitt 11a entfernt ist, ist der Einfluss des Ventils auf die Gleichmässigkeit der Strömung gering, was der Mess- und Regelgenauigkeit zugute kommt.

Im Ausführungsbeispiel der Fig. 4 ist der Ventilkörper 21 des Ventils 20 in Längsrichtung gedrungener ausgeführt, was vor allem durch die Verkürzung des Durchflussmessabschnitts 21b gegenüber dem Ventilabschnitt 21a erreicht wird. Die zwischen den Umlenkelementen 25a und 25b ausgebildete Messstrecke 26 ist entsprechend kürzer. Andererseits ist der Innendurchmesser im Bereich der Messstrecke 26 deutlich verringert, so dass dort eine höhere Strömungsgeschwindigkeit vorherrscht, die genauere Messungen begünstigt. Zur Ein- und Auskopplung des Ultraschalls quer zur Strömungsrichtung sind wiederum zwei Messflansche 24a und 24b vorgesehen. Das Ventil ist ― wie in Fig. 3 ― mit einer Kugel als Ventilelement 22 und einer Ventilspindel 23 ausgeführt. Wie in Fig. 3 liegen Ventilspindel 23 und Messflansche 24a und 24b auf derselben Seite des Ventilkörpers 21, insbesondere in einer zur Strömungsrichtung parallelen Linie.

Der Vorteil der in Fig. 3 und Fig. 4 dargestellten kompakten, einstückigen Ventilkörper 11 und 21 für die Gesamtanordnung wird aus dem in Fig. 5 wiedergegebenen Beispiel deutlich, in welchem das dortige Steuerventil 30 mit angebrachter Regeleinheit 62 dargestellt ist. Das Regelventil 30 hat wiederum einen einstückigen Ventilkörper 31, der unterteilt ist in einen Ventilabschnitt 31a und einen Durchflussmessabschnitt 31b. Im Ventilabschnitt ist als Ventilelement 32 wiederum eine Kugel mit zentralem Durchgang drehbar gelagert und über eine nach aussen geführte Ventilspindel verstellbar. Im (gerade durchgehenden) Durchflussmessabschnitt 31b ist in einem Teilabschnitt mit verringertem Durchmesser zwischen zwei Umlenkelementen 35a und 35b parallel zur Strömungsrichtung eine Ultraschall-Messstrecke 36 ausgebildet, in die durch zwei Messflansche 34a und 34b Ultraschall ein- bzw. ausgekoppelt werden kann.

Die für das Senden und Empfangen der Ultraschallsignale vorgesehenen Transducer 29a und 29b sind auf einer gedruckten Schaltungsplatte (PCB) 37 in der Regeleinheit 62 angeordnet und über Rohrstücke 65a und 65b mit den Messflanschen 34a und 34b verbunden. Die gedruckte Schaltungsplatte 37, auf der alle elektronischen und elektrischen Einheiten und Bauelemente für die Ultraschallmessung, Steuerung und Regelung untergebracht und miteinander fest verdrahtet sind, ist mittels eines pfostenförmigen Befestigungselements 64 am Ventilkörper 31 befestigt. Sie ist von einem zweiteiligen Gehäuse umschlossen, das aus einem Gehäuseunterteil 18 und einem Gehäuseoberteil 19 zusammensetzbar ist. Mit dem Anbringen der Regeleinheit 62 am Ventilkörper 31 werden nicht nur die Transducer 34a und 34b optisch mit der Messstrecke 36 verbunden, sondern auch eine in der Regeleinheit 62 untergebrachte Antriebseinheit aus Motor 28 und Getriebe 27 mit der Ventilspindel 33 des Ventils in Eingriff gebracht. Für die Energieversorgung der Regeleinheit 62 und die steuerungstechnische Verbindung mit einer entfernten Zentraleinheit ist aus der Regeleinheit 62 ein Anschlusskabel 38 herausgeführt. Von der Zentraleinheit können über das Anschlusskabel 38 (oder auch funktechnisch, d.h. drahtlos) Sollwerte vorgegeben werden, die dann durch entsprechende Regelung vor Ort eingestellt und eingehalten werden.

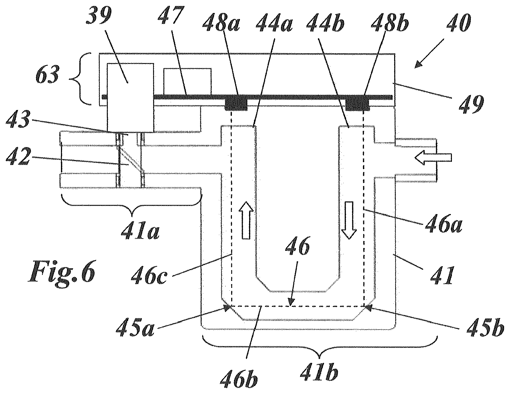

Bei den Ausführungsbeispielen der Figuren 3-5 sind im Strömungsweg jeweils zwei Umlenkelemente 16a,b, 25a,b und 35a,b angeordnet, zwischen denen die Messstrecke ausgebildet ist. Die Umlenkelemente können sich unter Umständen störend auf die Strömung auswirken. Um dies zu vermeiden, können im Rahmen der Erfindung andere Anordnungen für die Ultraschallmessung gewählt werden. Eine dieser Anordnungen ist in im Ausführungsbeispiel der Fig. 6 verwirklicht. Auch hier ist bei dem Steuerventil 40 wieder ein einstückiger Ventilkörper 41 vorgesehen, der unterteilt ist in einen Ventilabschnitt 41a und einen Durchflussmessabschnitt 41b. Im Ventilabschnitt 41a ist ein Ventilkörper 42 drehbar angeordnet und durch eine nach aussen geführte Ventilspindel 43 betätigbar.

Anders als bei den vorherigen Ausführungsbeispielen verläuft hier die Strömungsrichtung im Durchflussmessabschnitt 41b nicht gerade, sondern folgt einem U-förmigen Verlauf, bei welchem die Strömung (bei praktisch konstantem Strömungsquerschnitt) in einem ersten Teilabschnitt (Messstreckenabschnitt 41a) senkrecht zur vom Ventil vorgegebenen Hauptstromrichtung, in einem zweiten Teilabschnitt (Messstreckenabschnitt 41b) parallel zur Hauptstromrichtung und in einem dritten Teilabschnitt (Messstreckenabschnitt 41c) wieder senkrecht zur Hauptstromrichtung strömt. Die Messstrecke 46 folgt mit ihren Messstreckenabschnitten 46a-c dem U-förmigen Verlauf der Strömung, wobei der Ultraschall, der von Transducern 48a und 48b ausgesendet bzw. empfangen wird, quer zur Hauptstromrichtung in den ersten oder dritten Teilabschnitt eingekoppelt bzw. aus dem ersten oder dritten Teilabschnitt ausgekoppelt wird. Zur Umlenkung des Ultraschalls zwischen den Teilabschnitten bzw. Messstreckenabschnitten 46a-c sind an den Übergängen zwischen dem ersten und zweiten Teilabschnitt und dem zweiten und dritten Teilabschnitt Umlenkelemente 45a und 45b in Form von abgeschrägten Ecken ausgebildet.

Auf diese Weise wird bei gleichzeitig kompaktem Aufbau der Anordnung eine vergleichsweise lange Messstrecke zur Verfügung gestellt, ohne dass die Strömung durch die Messanordnung massgeblich gestört wird.

Auch hier ist die Steuer- und Regelungstechnik einschliesslich des notwendigen Ventilantriebs 39 in einer kompakten Regeleinheit 63 auf einer gedruckten Schaltungsplatte 47 untergebracht. Die von den Transducern 48a und 48b ausgesendeten bzw. empfangenen Ultraschallsignale gelangen zur bzw. kommen von der Messstrecke 46 über Einkoppelöffnungen 44a und 44b.

Die bis hier beschriebenen Ausgestaltungen und Ausführungsbeispiele haben sich auf ein elektronisch geregeltes druckunabhängiges Ventil vom Typ EPIV bezogen. Soll ein solches Ventil zur Messung und Regelung der an einen Verbraucher (z.B. Wärmetauscher oder dgl.) abgegebenen Energie eingesetzt werden, muss über die Messung des Volumenstroms hinaus auch die Temperatur des Mediums vor und hinter dem Verbraucher gemessen werden. Das Ventil wird dann zu einem "energy valve". Ein solches Ventil erfasst und speichert die Verbrauchswerte der Wasserkreisläufe, in denen es eingesetzt ist. Ein damit mögliches "Energie-Monitoring" liefert die Grundlagen, um Warm- und Kaltwasserkreisläufe zu überwachen, zu analysieren und energetisch zu optimieren.

Dazu werden zusätzlich zwei Temperatursensoren benötigt, die zusätzlich die Temperatur im Vor- und Rücklauf messen. Da das Ventil in einer der Leitungen zum oder vom Verbraucher angeordnet ist, kann einer der Temperatursensoren direkt in das Ventil integriert werden.

Die auf diese Weise vom Ventil erfassten Daten zeigen zudem Veränderungen im System auf. So lässt sich eine Anlage kontrollieren und Leistungsreduktionen, die beispielsweise durch die Verschmutzung eines Wärmetauschers entstanden sind, können eruiert und behoben werden. Weiterhin ist es möglich, einen Wärmetauscher stets im energetisch optimalen Bereich zu betreiben und somit den Werterhalt von Anlagen über die gesamte Betriebsdauer zu sichern.

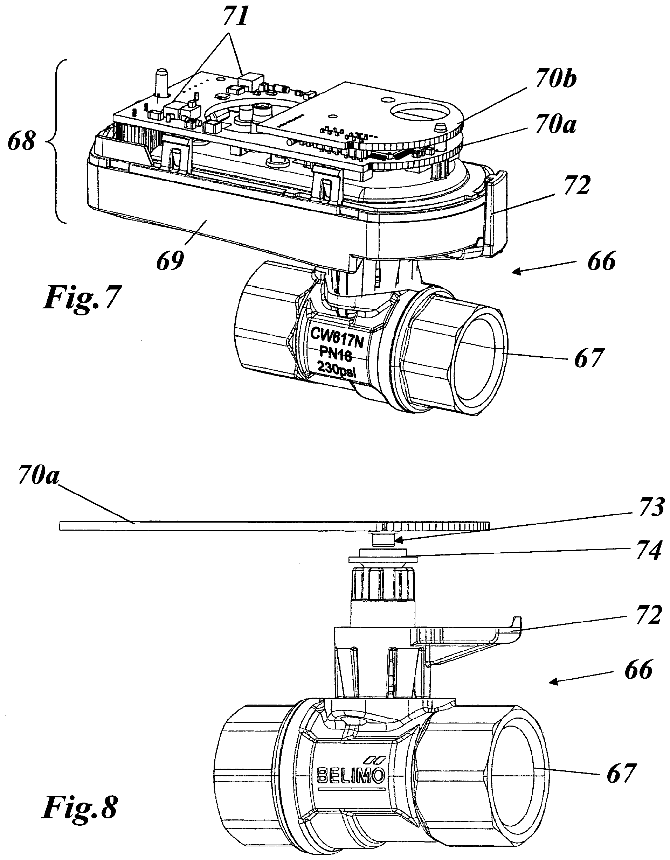

In den Fig. 7 bis 10 ist ein Ausführungsbeispiel eines geregelten druckunabhängigen Ventils wiedergegeben, das auf dem bereits erläuterten Konzept basiert und zusätzlich eine vollständig integrierte Temperaturmessung vorsieht. Hierbei wird der Einfachheit halber nur der Ventilabschnitt 67 des Ventils betrachtet, in welchem die Temperaturmessung integriert ist, und der Durchflussmessabschnitt weggelassen.

Fig. 7 zeigt in einer perspektivischen Darstellung einen Ventilabschnitt 67 eines Steuerventils 66 in Form eines Kugelventils mit einer aufgesetzten Regeleinheit 68, in deren Unterteil 69 die Antriebsmechanik für das Ventil untergebracht ist und die im Oberteil die bei abgenommener Schutzhaube erkennbaren gedruckten Schaltungsplatten (PCBs) 70a und 70b enthält, auf denen verschiedene Bauelemente 71 der zugehörigen Elektronik angeordnet und untereinander elektrisch verbunden sind. Erkennbar ist in Fig. 7 auch ein Mitnehmer 72, der bei Verstellung des Ventils entsprechend verschwenkt wird und zur Anzeige und Begrenzung der Ventilstellung mittels eines verstellbaren Anschlags verwendet werden kann.

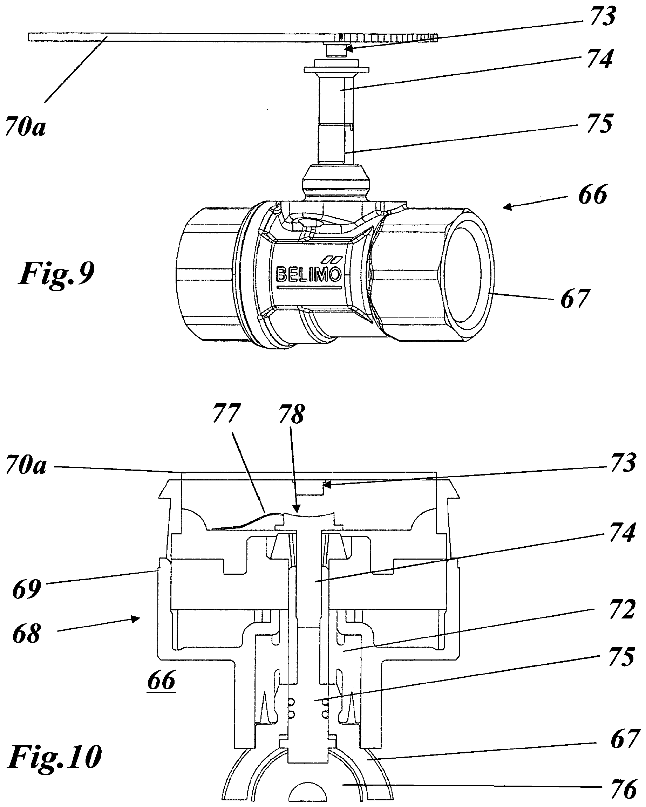

In der vereinfachten Darstellung der Fig. 8 sind nur der Ventilabschnitt 67, der Mitnehmer 72, eine über den Mitnehmer 72 oben herausragende Spindelverlängerung 74 und die gedruckte Schaltungsplatte 70a mit einem auf der Unterseite angeordneten und mit der optischen Öffnung auf die Stirnfläche der Spindelverlängerung 74 gerichteten Infrarotsensor 73 wiedergegeben. Wird der Mitnehmer 72 ― wie in Fig. 9 geschehen ― ganz weggelassen, wird die aus dem Ventilkörper oben herausstehenden Ventilspindel 75 mit der aufgesetzten Spindelverlängerung 74 erkennbar.

Zweck dieser Anordnung ist es, die Temperatur des mit dem durchströmenden Medium in thermischem Kontakt stehenden Ventilelements, in diesem Fall der Ventilkugel (76 in Fig. 10), über Festkörper-Wärmeleitung der Ventilspindel 75 und der daran anschliessenden Spindelverlängerung 74 verlustarm bis in die obere Frontfläche der Spindelverlängerung 74 zu übertragen, wo sie dann berührungslos über eine Infrarotmessung mittels des Infrarotsensors 73 bestimmt wird.

Eine solche Anordnung hat den Vorteil, dass keinerlei Verdrahtung zwischen dem Ventilkörper und der Elektronik nötig ist, wie z.B. bei einem in den Ventilkörper eingesetzten Temperaturfühler. Der zwangsläufige Temperaturabfall am Ventilelement, der Ventilspindel 75 und der Spindelverlängerung 74 kann durch eine entsprechende Materialwahl für Ventilspindel 75 und der Spindelverlängerung 74 (gute Wärmeleitfähigkeit) reduziert und durch eine Kalibrierungskurve oder ―tabelle berücksichtigt und kompensiert werden. Weiterhin kann die obere Stirnfläche der Spindelverlängerung 74 ― wie in Fig. 10 erkennbar ― durch geeignete Krümmung an den Öffnungswinkel des Infrarotsensors 73 angepasst werden. Auch kann die Stirnfläche mit einer die Infrarot-Emission verbessernden Emissionsschicht 78 versehen werden. Schliesslich kann der Festkörperkontakt zwischen Ventilspindel 75 und Spindelverlängerung 74 durch einen Anpressdruck verstärkt werden, der von einer von oben auf die Spindelverlängerung 74 drückenden Blattfeder 77 oder einem vergleichbaren Federelement erzeugt wird. Die Spindelverlängerung 74 ist in der Regeleinheit 68 gelagert und kommt mit der Ventilspindel 75 in Kontakt, wenn die Regeleinheit 68 aufgesetzt wird.

Mit der integrierten berührungslosen Temperaturmessung kann eine der beiden Temperaturen bestimmt werden. Die andere Temperatur wird dann über einen externen Messfühler ermittelt, der an der anderen Leitung angebracht und mit der Regeleinheit 68 verbunden werden muss.

Anhand der Fig. 7 bis 10 ist der Ventilabschnitt eines geregelten Steuerventils 66 mit einer integrierten Temperaturmessung erläutert worden. Es ist jedoch auch denkbar, eine solche integrierte Temperaturmessung bei einem (ungeregelten) eigenständigen Ventil, insbesondere einem Kugelventil, vorzusehen, ohne dass dieses mit einer Durchflussmesseinrichtung unmittelbar kombiniert sein muss. In diesem Fall würde die Regeleinheit durch eine Steuereinheit bzw. einen Aktuator ersetzt, der das Ventil betätigt und gleichzeitig die Temperatur des durch das Ventil strömenden Mediums aufnehmen kann.

Ein solches Steuerventil für Anwendungen im HVAC-Bereich würde einen von einem strömenden Medium durchsetzten Ventilkörper umfassen, in welchem für die Steuerung des Durchflusses ein über eine Ventilspindel von aussen betätigbares Ventilelement angeordnet ist, und auf den Ventilkörper eine abnehmbare Steuereinheit aufgesetzt ist, welche erste Mittel zur Betätigung des Ventilelements umfasst, die mit der Ventilspindel in Eingriff stehen, sowie zweite Mittel zur Messung der Temperatur des durch das Steuerventil strömenden Mediums vorgesehen sind, wobei die zweiten Mittel zur berührungslosen Temperaturmessung an einem mit dem durch das Steuerventil strömenden Medium in thermischem Kontakt befindlichen Teil des Ventils ausgebildet sind.

Insbesondere könnten die zweiten Mittel einen Infrarotsensor umfassen, der in der Steuereinheit untergebracht ist, wobei der mit dem durch das Steuerventil strömenden Medium in thermischem Kontakt befindlichen Teil die in die Steuereinheit hineinragende Ventilspindel des Ventils ist.

Dabei könnte der Infrarotsensor mit einem Abstand über dem freien Ende der Ventilspindel angeordnet sein, wobei zur Überbrückung des Abstandes die Ventilspindel mit einer Spindelverlängerung verlängert ist.

Insbesondere könnte die Spindelverlängerung in der Steuereinheit gelagert sein, wobei die Spindelverlängerung zur Verbesserung des thermischen Kontaktes mit Federspannung gegen das freie Ende der Ventilspindel gepresst wird.

### Bezugszeichenliste

- 10,20: elektronischer Durchflussregler
- 11,21: Ventilkörper
- 11a: Ventilabschnitt
- 11b: Durchflussmessabschnitt
- 12,22: Ventilelement (z.B. Kugel)
- 13,23: Ventilspindel
- 14a,b: Messflansch
- 15a,b: Öffnung
- 16a,b: Umlenkelement
- 17,26: Messstrecke
- 18: Gehäuseunterteil
- 19: Gehäuseoberteil
- 21a: Ventilabschnitt
- 21b: Durchflussmessabschnitt
- 24a,b: Messflansch
- 25a,b: Umlenkelement
- 27: Getriebe
- 28: Motor
- 29a,b: Transducer (Ultraschall)
- 30,40: elektronischer Durchflussregler
- 31,41: Ventilkörper
- 31a: Ventilabschnitt
- 31b: Durchflussmessabschnitt
- 32: Ventilelement (z.B. Kugel)
- 33: Ventilspindel
- 34a,b: Messflansch
- 35a,b: Umlenkelement
- 36: Messstrecke
- 37: gedruckte Schaltungsplatte (PCB)
- 38: Anschlusskabel
- 39: Ventilantrieb
- 41a: Ventilabschnitt
- 41b: Durchflussmessabschnitt
- 42: Ventilelement (z.B. Teller)
- 43: Ventilspindel
- 44a,b: Einkoppelöffnung
- 45a,b: Umlenkelement
- 46: Messstrecke
- 46a-c: Messstreckenabschnitt
- 47: gedruckte Schaltungsplatte (PCB)
- 48a,b: Transducer (Ultraschall)
- 49: Gehäuse
- 50: elektronischer Durchflussregler
- 51: Ventilkörper
- 51a,b: Anschlussflansch
- 52: Ventilelement
- 52a: Betätigungsschaft
- 53: Srömungsmesseinrichtung
- 54: Motor
- 55: Steueranordnung
- 56: Messteil
- 57: Ventilteil
- 58: Steuer- und Antriebselektronik
- 59a,b: Transducer (Ultraschall)
- 59c: Ultraschall-Ansteuer- und Auswertelektronik
- 60: Messstrecke
- 61: Verkabelung
- 62,63: Regeleinheit
- 64: Befestigungselement
- 65a,b: Rohrstück
- 66: Steuerventil
- 67: Ventilabschnitt (z.B. Kugelventil)
- 68: Regeleinheit
- 69: Unterteil
- 70a,b: gedruckte Schaltungsplatte (PCB)
- 71: Bauelement
- 72: Mitnehmer (Spindel)
- 73: Infrarotsensor
- 74: Spindelverlängerung
- 75: Ventilspindel
- 76: Ventilkugel (Ventilelement)
- 77: Blattfeder
- 78: Emissionsschicht

## Patentansprüche

1. Elektronischer Durchflussregler (10, 20, 30, 40, 66) für Anwendungen im HVAC-Bereich, welcher einen von einem strömenden Medium durchsetzten, einstückigen Ventilkörper (11, 21, 31, 41) umfasst, der entlang der Strömungsrichtung in einen Ventilabschnitt (11a, 21a, 31a, 41a, 67) und einen Durchflussmessabschnitt (11b, 21b, 31b, 41b) unterteilt ist, wobei im Ventilabschnitt (11a, 21a, 31a, 41a, 67) für die Steuerung des Durchflusses ein über eine Ventilspindel (13, 23, 33, 43, 75) von aussen betätigbares Ventilelement (12, 22, 32, 42, 76) angeordnet ist, und wobei im Durchflussmessabschnitt (11b,21b, 31b, 41b) eine Messstrecke (17, 26, 36, 46) zur Bestimmung der Durchflussrate mittels Ultraschall ausgebildet ist, **dadurch gekennzeichnet, dass** am Ventilkörper (11, 21, 31, 41) im Bereich des Durchflussmessabschnitts (11b,21b, 31b, 41b) Zugänge (14a,b, 15a,b, 24a,b, 34a,b, 44a,b) zum Ein- bzw. Auskoppeln von Ultraschall in die bzw. aus der Messstrecke (17, 26, 36, 46) ausgebildet sind, und dass auf den Ventilkörper (11, 21, 31, 41) eine Regeleinheit (62, 63, 68) aufgesetzt ist, welche erste Mittel (27, 28, 39) zur Betätigung des Ventilelements (12, 22, 32, 42, 76) umfasst, die mit der Ventilspindel (13, 23, 33, 43, 75) in Eingriff stehen, sowie zweite Mittel (29a,b, 48a,b) zum Aussenden bzw. Empfangen von Ultraschallsignalen, welche akustisch an die Zugänge (14a,b, 15a,b, 24a,b, 34a,b, 44a,b) zum Ein- bzw. Auskoppeln von Ultraschall angekoppelt sind.

2. Elektronischer Durchflussregler nach Anspruch 1, **dadurch gekennzeichnet, dass** die Ventilspindel (13, 23, 33, 43, 75) und die Zugänge (14a,b, 15a,b, 24a,b, 34a,b, 44a,b) zum Ein- bzw. Auskoppeln von Ultraschall an einer Seite des Ventilkörpers (11, 21, 31, 41) angeordnet sind, und dass die Regeleinheit (62, 63, 68) an dieser Seite auf den Ventilkörper (11, 21, 31, 41) aufgesetzt ist.

3. Elektronischer Durchflussregler nach Anspruch 2, **dadurch gekennzeichnet, dass** die Ventilspindel (13, 23, 33, 43, 75) und die Zugänge (14a,b, 15a,b, 24a,b, 34a,b, 44a,b) zum Ein- bzw. Auskoppeln von Ultraschall in einer parallel zur Strömungsrichtung orientierten Linie angeordnet sind.

4. Elektronischer Durchflussregler nach Anspruch 1, **dadurch gekennzeichnet, dass** die Messstrecke (17, 26, 36, 46) zur Bestimmung der Durchflussrate mittels Ultraschall parallel zur Strömungsrichtung im Durchflussmessabschnitt (11b, 21b, 31b, 41b) orientiert ist.

5. Elektronischer Durchflussregler nach Anspruch 4, **dadurch gekennzeichnet, dass** die Strömungsrichtung im Durchflussmessabschnitt (11b, 21b, 31b) konstant ist, dass der Ultraschall quer zur Messstrecke (17, 26, 36) in der Messstrecke (17, 26, 36) eingekoppelt bzw. aus der Messstrecke (17, 26, 36) ausgekoppelt wird, und dass zur Ein- bzw. Auskopplung im Durchflussmessabschnitt (11b, 21b, 31b) am Anfang und Ende der Messstrecke (17, 26, 36) angeordnete Umlenkelemente (16a,b, 25a,b, 35a,b) vorgesehen sind.

6. Elektronischer Durchflussregler nach Anspruch 5, **dadurch gekennzeichnet, dass** der Strömungsquerschnitt im Durchflussmessabschnitt (21b, 31b) im Bereich der Messstrecke (26, 36) reduziert ist.

7. Elektronischer Durchflussregler nach Anspruch 4, **dadurch gekennzeichnet, dass** die Strömungsrichtung im Durchflussmessabschnitt (41b) einem U-förmigen Verlauf folgt, bei welchem die Strömung in einem ersten Teilabschnitt senkrecht zur durch das Ventil vorgegebenen Hauptstromrichtung, in einem zweiten Teilabschnitt parallel zur Hauptstromrichtung und in einem dritten Teilabschnitt wieder senkrecht zur Hauptstromrichtung strömt, dass die Messstrecke (46) dem U-förmigen Verlauf der Strömung folgt, dass der Ultraschall quer zur Hauptstromrichtung in den ersten oder dritten Teilabschnitt eingekoppelt bzw. aus dem ersten oder dritten Teilabschnitt ausgekoppelt wird, und dass an den Übergängen zwischen dem ersten und zweiten Teilabschnitt und dem zweiten und dritten Teilabschnitt Umlenkelemente (45a,b) ausgebildet sind.

8. Elektronischer Durchflussregler nach Anspruch 1, **dadurch gekennzeichnet, dass** das Ventilelement (12, 22, 32, 76) kugelförmig ausgebildet ist.

9. Elektronischer Durchflussregler nach Anspruch 1, **dadurch gekennzeichnet, dass** in der Regeleinheit (62, 63, 68) die ersten Mittel (27, 28, 39) zur Betätigung des Ventilelements (12, 22, 32, 42) und die zweiten Mittel (29a,b, 48a,b) zum Aussenden bzw. Empfangen von Ultraschallsignalen unter Ausbildung eines Regelkreises mit einer elektronischen Steuerung fest verdrahtet sind.

10. Elektronischer Durchflussregler nach Anspruch 9, **dadurch gekennzeichnet, dass** zur festen Verdrahtung eine gedruckte Schaltungsplatte (37, 47, 70a, 70b) vorgesehen ist.

11. Elektronischer Durchflussregler nach Anspruch 1, **dadurch gekennzeichnet, dass** die Regeleinheit (62, 63) in einem geschlossenen Gehäuse (18, 19, 49, 69) untergebracht ist.

12. Elektronischer Durchflussregler nach Anspruch 1, **dadurch gekennzeichnet, dass** die Zugänge (14a,b, 15a,b, 24a,b, 34a,b) am Ventilkörper (11, 21, 31, 41) zum Ein- bzw. Auskoppeln von Ultraschall in die bzw. aus der Messstrecke (17, 26, 36) als seitlich abgehende Flansche ausgebildet sind.

13. Elektronischer Durchflussregler nach Anspruch 1, **dadurch gekennzeichnet, dass** dritte Mittel (73, 74) zur Messung der Temperatur des durch das Steuerventil (66) strömenden Mediums vorgesehen sind.

14. Elektronischer Durchflussregler nach Anspruch 13, **dadurch gekennzeichnet, dass** die dritten Mittel (73, 74) im Ventilabschnitt (67) des Steuerventils (66) angeordnet sind.

15. Elektronischer Durchflussregler nach Anspruch 14, **dadurch gekennzeichnet, dass** die dritten Mittel (73, 74) zur berührungslosen Temperaturmessung an einem mit dem durch das Steuerventil (66) strömenden Medium in thermischem Kontakt befindlichen Teil (75) des Ventilabschnitts (67) ausgebildet sind.

16. Elektronischer Durchflussregler nach Anspruch 15, **dadurch gekennzeichnet, dass** die dritten Mittel (73, 74) einen Infrarotsensor (73) umfassen, der in der Regeleinheit (68) untergebracht ist, und dass der mit dem durch das Steuerventil (66) strömenden Medium in thermischem Kontakt befindlichen Teil die in die Regeleinheit (68) hineinragende Ventilspindel (75) des Ventilabschnitts (67) ist.

17. Elektronischer Durchflussregler nach Anspruch 16, **dadurch gekennzeichnet, dass** der Infrarotsensor (73) mit einem Abstand über dem freien Ende der Ventilspindel (75) angeordnet ist, und dass zur Überbrückung des Abstandes die Ventilspindel (75) mit einer Spindelverlängerung (74) verlängert ist.

18. Elektronischer Durchflussregler nach Anspruch 17, **dadurch gekennzeichnet, dass** die Spindelverlängerung (74) in der Regeleinheit (68) gelagert ist, und dass die Spindelverlängerung (74) zur Verbesserung des thermischen Kontaktes mit Federspannung gegen das freie Ende der Ventilspindel (75) gepresst wird.

## Claims

1. Electronic flow regulator (10, 20, 30, 40, 66) for HVAC applications, which includes a one-piece valve body (11, 21, 31, 41) through which a flowing medium passes, said valve body being subdivided into a valve portion (11a, 21a, 31a, 41a, 67) and a throughflow measurement portion (11b, 21b, 31b, 41b) along the flow direction, wherein, in the valve portion (11a, 21a, 31a, 41a, 67), there is arranged, for the control of the throughflow, a valve element (12, 22, 32, 42, 76) which can be actuated externally via a valve spindle (13, 23, 33, 43, 75), and wherein, in the throughflow measurement portion (11b, 21b, 31b, 41b), a measurement path (17, 26, 36, 46) is configured to determine the flow rate by means of ultrasound, **characterized in that**, at the valve body (11, 21, 31, 41) in the region of the throughflow measurement portion (11b, 21b, 31b, 41b), accesses (14a,b, 15a,b, 24a,b, 34a,b, 44a,b) are configured to couple ultrasound into or out of the measurement path (17, 26, 36, 46), and **in that** a regulating unit (62, 63, 68) is mounted onto the valve body (11, 21, 31, 41), which regulating unit includes first means (27, 28, 39) for actuating the valve element (12, 22, 32, 42, 76), which are in engagement with the valve spindle (13, 23, 33, 43, 75), and second means (29a,b, 48a,b) for emitting or receiving ultrasound signals, which are coupled acoustically to the accesses (14a,b, 15a,b, 24a,b, 34a,b, 44a,b) for coupling in or coupling out ultrasound.

2. Electronic flow regulator according to Claim 1, **characterized in that** the valve spindle (13, 23, 33, 43, 75) and the accesses (14a,b, 15a,b, 24a,b, 34a,b, 44a,b) for coupling in or coupling out ultrasound are arranged on one side of the valve body (11, 21, 31, 41), and **in that** the regulating unit (62, 63, 68) is mounted onto the valve body (11, 21, 31, 41) on this side.

3. Electronic flow regulator according to Claim 2, **characterized in that** the valve spindle (13, 23, 33, 43, 75) and the accesses (14a,b, 15a,b, 24a,b, 34a,b, 44a,b) for coupling in or coupling out ultrasound are arranged in a line which is oriented parallel to the flow direction.

4. Electronic flow regulator according to Claim 1, **characterized in that** the measurement path (17, 26, 36, 46) for determining the flow rate by means of ultrasound is oriented parallel to the flow direction in the throughflow measurement portion (11b, 21b, 31b, 41b).

5. Electronic flow regulator according to Claim 4, **characterized in that** the flow direction in the throughflow measurement portion (11b, 21b, 31b) is constant, **in that** the ultrasound is coupled into the measurement path (17, 26, 36) or is coupled out of the measurement path (17, 26, 36) transversely to the measurement path (17, 26, 36), and **in that**, for coupling in or coupling out, deflection elements (16a,b, 25a,b, 35a,b) arranged at the start and end of the measurement path (17, 26, 36) are provided in the throughflow measurement portion (11b, 21b, 31b).

6. Electronic flow regulator according to Claim 5, **characterized in that** the flow cross section in the throughflow measurement portion (21b, 31b) is reduced in the region of the measurement path (26, 36).

7. Electronic flow regulator according to Claim 4, **characterized in that** the flow direction in the throughflow measurement portion (41b) follows a U-shaped course, for which the flow flows perpendicularly to the main flow direction, which is predefined by the valve, in a first sub-portion, flows parallel to the main flow direction in a second sub-portion, and flows perpendicularly to the main flow direction again in a third sub-portion, **in that** the measurement path (46) follows the U-shaped course of the flow, **in that** the ultrasound is coupled into the first or third sub-portion or is coupled out of the first or third sub-portion transversely to the main flow direction, and **in that** deflection elements (45a,b) are formed at the transitions between the first and second sub-portions and the second and third sub-portions.

8. Electronic flow regulator according to Claim 1, **characterized in that** the valve element (12, 22, 32, 76) is of spherical form.

9. Electronic flow regulator according to Claim 1, **characterized in that**, in the regulating unit (62, 63, 68), the first means (27, 28, 39) for actuating the valve element (12, 22, 32, 42) and the second means (29a,b, 48a,b) for emitting or receiving ultrasound signals are hard-wired to an electronic controller so as to form a closed-loop control circuit.

10. Electronic flow regulator according to Claim 9, **characterized in that**, for the hard-wiring, a printed circuit board (37, 47, 70a, 70b) is provided.

11. Electronic flow regulator according to Claim 1, **characterized in that** the regulating unit (62, 63) is accommodated in a closed housing (18, 19, 49, 69).

12. Electronic flow regulator according to Claim 1, **characterized in that** the accesses (14a,b, 15a,b, 24a,b, 34a,b) at the valve body (11, 21, 31, 41) are configured to couple ultrasound into or out of the measurement path (17, 26, 36) as laterally branching flanges.

13. Electronic flow regulator according to Claim 1, **characterized in that** third means (73, 74) for measuring the temperature of the medium flowing through the control valve (66) are provided.

14. Electronic flow regulator according to Claim 13, **characterized in that** the third means (73, 74) are arranged in the valve portion (67) of the control valve (66) .

15. Electronic flow regulator according to Claim 14, **characterized in that** the third means (73, 74) are configured to measure temperature contactless at a part (75) of the valve portion (67) that is in thermal contact with the medium flowing through the control valve (66).

16. Electronic flow regulator according to Claim 15, **characterized in that** the third means (73, 74) include an infrared sensor (73) which is accommodated in the regulating unit (68), and **in that** the part in thermal contact with the medium flowing through the control valve (66) is the valve spindle (75), projecting into the regulating unit (68), of the valve portion (67).

17. Electronic flow regulator according to Claim 16, **characterized in that** the infrared sensor (73) is arranged at a distance above the free end of the valve spindle (75), and **in that**, for bridging the distance, the valve spindle (75) is extended by a spindle extension (74) .

18. Electronic flow regulator according to Claim 17, **characterized in that** the spindle extension (74) is fitted in the regulating unit (68), and **in that**, for improving the thermal contact, the spindle extension (74) is pressed by spring tension against the free end of the valve spindle (75).

## Revendications

1. Régulateur de débit électronique (10, 20, 30, 40, 66) pour des applications dans le secteur du CVC, lequel comporte un corps de vanne (11, 21, 31, 41) monobloc traversé par un fluide en écoulement, qui est subdivisé en une portion de vanne (11a, 21a, 31a, 41a, 67) et une portion de mesure de débit (11b, 21b, 31b, 41b) le long de la direction d'écoulement, un élément de vanne (12, 22, 32, 42, 76) pouvant être actionné depuis l'extérieur par le biais d'une broche de vanne (13, 23, 33, 43, 75) étant disposé dans la portion de vanne (11a, 21a, 31a, 41a, 67) pour la commande du débit, et un segment de mesure (17, 26, 36, 46) destiné à déterminer le débit au moyen d'ultrasons étant formé dans la portion de mesure de débit (11b, 21b, 31b, 41b), **caractérisé en ce que** des accès (14a,b, 15a,b, 24a,b, 34a,b, 44a,b) servant à injecter ou à découpler des ultrasons dans ou hors du segment de mesure (17, 26, 36, 46) sont formés sur le corps de vanne (11, 21, 31, 41) dans la zone de la portion de mesure de débit (11b, 21b, 31b, 41b), et **en ce qu'**une unité de régulation (62, 63, 68) est posée sur le corps de vanne (11, 21, 31, 41) laquelle comporte des premiers moyens (27, 28, 39) servant à actionner l'élément de vanne (12, 22, 32, 42, 76), qui se trouvent en prise avec la broche de vanne (13, 23, 33, 43, 75), ainsi que des deuxièmes moyens (29a,b, 48a,b) servant à émettre ou à recevoir des signaux ultrasonores, qui sont couplés acoustiquement aux accès (14a,b, 15a,b, 24a,b, 34a,b, 44a,b) servant à injecter ou à découpler des ultrasons.

2. Régulateur de débit électronique selon la revendication 1, **caractérisé en ce que** la broche de vanne (13, 23, 33, 43, 75) et les accès (14a,b, 15a,b, 24a,b, 34a,b, 44a,b) servant à injecter ou à découpler des ultrasons sont disposés d'un côté du corps de vanne (11, 21, 31, 41 ), et **en ce que** l'unité de régulation (62, 63, 68) est posée de ce côté sur le corps de vanne (11, 21, 31, 41).

3. Régulateur de débit électronique selon la revendication 2, **caractérisé en ce que** la broche de vanne (13, 23, 33, 43, 75) et les accès (14a,b, 15a,b, 24a,b, 34a,b, 44a,b) servant à injecter ou à découpler des ultrasons sont disposés dans une ligne orientée parallèlement à la direction d'écoulement.

4. Régulateur de débit électronique selon la revendication 1, **caractérisé en ce que** le segment de mesure (17, 26, 36, 46) destiné à déterminer le débit au moyen d'ultrasons est orienté parallèlement à la direction d'écoulement dans la portion de mesure de débit (11b, 21b, 31b, 41b).

5. Régulateur de débit électronique selon la revendication 4, **caractérisé en ce que** la direction d'écoulement dans la portion de mesure de débit (11b, 21b, 31b) est constante, **en ce que** les ultrasons sont injectés dans le segment de mesure (17, 26, 36) ou découplés hors du segment de mesure (17 ,26, 36) transversalement par rapport au segment de mesure (17, 26, 36), et **en ce que** des éléments de renvoi (16a,b, 25a,b, 35a,b) disposés au début et à la fin du segment de mesure (17 ,26, 36) sont présents pour l'injection ou le découplage dans ou hors de la portion de mesure de débit (11b, 21b, 31b).

6. Régulateur de débit électronique selon la revendication 5, **caractérisé en ce que** la section transversale d'écoulement dans la portion de mesure de débit (21b, 31b) est réduite dans la zone du segment de mesure (26, 36).

7. Régulateur de débit électronique selon la revendication 4, **caractérisé en ce que** la direction d'écoulement dans la portion de mesure de débit (41b) suit un tracé en forme de U, avec lequel l'écoulement dans une première portion partielle s'effectue perpendiculairement à la direction d'écoulement principale prédéfinie par la vanne, parallèlement à la direction d'écoulement principale dans une deuxième portion partielle et de nouveau perpendiculairement à la direction d'écoulement principale dans une troisième portion partielle, **en ce que** le segment de mesure (46) suit le tracé en forme de U de l'écoulement, **en ce que** les ultrasons sont injectés dans la première ou la troisième portion partielle ou découplés hors de la première ou de la troisième portion partielle transversalement à la direction d'écoulement principale, et **en ce que** des éléments de renvoi (45a,b) sont formés au niveau des transitions entre les première et deuxième portions partielles et les deuxième et troisième portions partielles.

8. Régulateur de débit électronique selon la revendication 1, **caractérisé en ce que** l'élément de vanne (12, 22, 32, 76) est de configuration sphérique.

9. Régulateur de débit électronique selon la revendication 1, **caractérisé en ce que** dans l'unité de régulation (62, 63, 68), les premiers moyens (27, 28, 39) servant à actionner l'élément de vanne (12, 22, 32, 42) et les deuxièmes moyens (29a,b, 48a,b) servant à émettre ou à recevoir des signaux ultrasonores sont câblés à demeure avec une commande électronique en formant un circuit de régulation.

10. Régulateur de débit électronique selon la revendication 9, **caractérisé en ce qu'**une carte de circuit imprimé (37, 47 ,70a, 70b) est présente pour le câblage à demeure.

11. Régulateur de débit électronique selon la revendication 1, **caractérisé en ce que** l'unité de régulation (62, 63) est logée dans un boîtier (18, 19, 49, 69) fermé.

12. Régulateur de débit électronique selon la revendication 1, **caractérisé en ce que** les accès (14a,b, 15a,b, 24a,b, 34a,b) sur le corps de vanne (11, 21, 31, 41) servant à injecter ou à découpler des ultrasons dans ou hors du segment de mesure (17, 26, 36) sont réalisés sous la forme de brides sortant latéralement.

13. Régulateur de débit électronique selon la revendication 1, **caractérisé en ce que** des troisièmes moyens (73, 74) sont présents pour la mesure de la température du fluide qui s'écoule à travers la vanne de commande (66).

14. Régulateur de débit électronique selon la revendication 13, **caractérisé en ce que** les troisièmes moyens (73, 74) sont disposés dans la portion de vanne (67) de la vanne de commande (66) .

15. Régulateur de débit électronique selon la revendication 14, **caractérisé en ce que** les troisièmes moyens (73, 74) sont configurés pour la mesure de température sans contact au niveau d'une partie (75) de la portion de vanne (67) qui se trouve en contact thermique avec le fluide qui s'écoule à travers la vanne de commande (66).

16. Régulateur de débit électronique selon la revendication 15, **caractérisé en ce que** les troisièmes moyens (73, 74) comprennent un capteur à infrarouges (73), qui est logé dans l'unité de régulation (68), et **en ce que** la partie qui se trouve en contact thermique avec le fluide qui s'écoule à travers la vanne de commande (66) est la broche de vanne (75) de la portion de vanne (67) qui fait saillie dans l'unité de régulation (68).

17. Régulateur de débit électronique selon la revendication 16, **caractérisé en ce que** le capteur à infrarouges (73) est disposé à un écart donné au-dessus de l'extrémité libre de la broche de vanne (75), et **en ce que** la broche de vanne (75) est rallongée avec un prolongateur de broche (74) en vue de ponter l'écart.

18. Régulateur de débit électronique selon la revendication 17, **caractérisé en ce que** le prolongateur de broche (74) est monté dans l'unité de régulation (68), et **en ce que** le prolongateur de broche (74) est pressé avec une contrainte de ressort contre l'extrémité libre de la broche de vanne (75) en vue d'améliorer le contact thermique.
